**Europäisches Patentamt**

**European Patent Office**

**Office européen des brevets**

(19)

(11) Veröffentlichungsnummer: **0 067 893**
**B1**

(12) **EUROPÄISCHE PATENTSCHRIFT**

(45) Veröffentlichungstag der Patentschrift: **20.01.88**

(51) Int. Cl.⁴: **B 60 N 1/02**

(21) Anmeldenummer: **81104726.5**

(22) Anmeldetag: **19.06.81**

(54) In Fahrzeugen, insbesondere Kraftfahrzeugen anzuordnender Sitz.

(43) Veröffentlichungstag der Anmeldung:
**29.12.82 Patentblatt 82/52**

(45) Bekanntmachung des Hinweises auf die
Patenterteilung:
**20.01.88 Patentblatt 88/03**

(84) Benannte Vertragsstaaten:
**DE FR GB IT**

(56) Entgegenhaltungen:
**DE-A-2 901 208**
**DE-B-2 952 030**

(73) Patentinhaber: **KEIPER RECARO GmbH & Co.**
**Büchelstrasse 54-58 Postfach 14 03 80**
**D-5630 Remscheid 14 (DE)**

(72) Der Erfinder haben auf ihre Nennung verzichtet

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2 (DE)**

EP 0 067 893 B1

Courier Press, Leamington Spa, England.

**0 067 893**

**Beschreibung**

Die Erfindung betrifft eine Verstellvorrichtung für einen in Fahrzeugen, insbesondere Kraftfahrzeugen, anzuordnenden Sitz, mit der mehrere Antriebswellen für verschiedene Stellbewegungen über ein Verteilergetriebe alternativ kuppelbar sind, wobei die Verstellvorrichtung ein von einem Motor über sein Antriebsritzel (30) antreibbares Sonnenrad und wenigstens ein damit kämmendes, an einem Planetenträger gelagertes Planetenrad umfaßt, das über einen Steuerteil wahlweise mit dem jeweiliegen Zahnrad einer der Antreibswellen über einzelne Stell vorrichtungen für eine Sitzstellbewegung in Eingriff bringbar ist, wobei der Steuerteil aus einem während seiner Stellphase betätigbaren Antriebsglied gebildet ist, das mit einem während dieser Stellphase drehberen, jedoch durch Ruhestellungen unterbrochenen, als Planetenträger ausgebildeten Abtriebsglied im Eingriff ist.

Sitze, die in Kraftfahrzeugen eingesetzt werden, sind in bezug auf die Positionierung des Sitzbenutzers im Fahrzeug hinsichtlich der Bedienungsorgane, wie Lenkrad, Pedalen, Schalter, Hebel u.dgl., sowie hinsichtlich der optimalen, direkten und indirekten sichtverhältnisse nach draußen in der Höhe, der Neigung und der Sitzlängsrichtung einstellbar. Außerdem sollbein ergonomisch richtiges, ermüdungsfreies Sitzen des Sitzbenutzers durch Anpassung von Sitzkissen und Rückenlehne in bezug auf die Sitzneigung, Sitzbreite, seitliche Abstützung auf das Sitzprofil u.dgl. an den Sitzbenutzer ermöglicht werden. Zu diesem Zweck sind moderne Sitze und nicht zuletzt auch deren Kopfstützen in mehreren Richtungen einstellbar. Diese Sitzeinstellungen lassen sich sowohl manuell als auch motorisch zur Erhöhung des Bedienungskomforts vornehmen.

Um mehrere Verstellbewegungen an Sitzen von Fahrzeugen nacheinander mit nur einem einzeigen Antriebsmotor vornehhmen zu können, sind ein Verteilergetriebe umfassende Verstellvorrichtungen bekannt, bei denen die Stelleinheit eines solchen Verteilergetriebes aus Elektromagneten besteht. Diese Elektromagnete sind ringförmig ausgebildet und im Gehäuse des Verteilergetriebes ortsfest gelagert. Babei umrundet jeder Elecktromagnet eine Abtriebswelle derart, daß die darauf axial verschiebbar, jedoch undrehbar angeordnete Kupplungsscheibe bei Stromfluß im jeweiligen Elektromagneten durch diesen am lose auf der Abtriebswelle drehbaren Zahnrad eingerückt werden kann. Es sind nun bei dem bekannten Verteilergetriebe mehrere Abtriebswellen derart nebeneinander angeordnet, daß wenigstens zwei mit dem Ritzel des Antriebsmotors kämmen, während die Zahnräder weiterer Abtriebswellen mit den Zahnrädern der vorhergehenden Abtriebswelle im Eingriff sind. Da die Zahnräder selbst auf den Antriebswellen lose drehbar gelagert sind, erfolgt eine Drehmomentübertragung lediglich über diejenige Abtriebswelle, deren Elektromagnet die Kupplungsscheibe mit dem auf der zu kuppelnden Abtriebswelle drehbaren Zahnrad verbindet. Bei Stromlosstellung des jeweiligen Elektromagneten drückt eine zwischen dem Zahnrad und der Kupplungsscheibe befindliche Druckfeder die Kupplungsscheibe vom Zahnrad ab, so daß hier die Kupplungsverbindung aufgehoben ist. Die Abtriebswellen des Verteilergetriebes können flexible Wellen mit der zugehörigen Stellvorrichtung des Sitzrahmens bzw. der Rückenlehne verbunden sein. Durch Schaltung des der entsprechenden Abtriebswelle zugehörigen Elektromagneten kann demnach jede der Stellvorrichtungen von ein und demselben Antriebsmotor betätigt werden.

Außer dieser elektromagnetisch schaltbaren, ein Verteilergetriebe umfassenden Verstellvorrichtung ist aus der DE-OS 29 01 208 ein mechanisch verstellbares Verteilergetriebe bekannt, das von einem Hilfsmotor betätigbare Stellmittel in Form einer Stellspindel und einen auf der Stellspindel, verschiebbare Kupplungen ein- und ausrückenden Stellschuh aufweist. Der über die Stellspindel verschiebbare Stellschuh drückt durch entsprechende Verstellung auf der Stellspindel einen der jeweiligen Kupplung zugehörigen Stellhebel in Einrückpositon, so daß die drehfest, aber axial verschiebbar mit einer Abtriebswelle verbundene Kupplung mit einem lose auf der Abtriebswelle drehbaren Stirnrad in Eingriff gedrückt wird. Somit läßt sich die Drehbewegung des Antriebsritzels auf die ausgewählte Abtriebswelle so lange übertragen, wie die Kupplung über die Stellhebel und den Stellschuh auf der Gewindespindel im Eingriff bleibt. Bei Verstellung der Gewindespindel drückt eine Feder die geschaltete Kupplung wieder außer Eingriff, und es kann eine andere Abtriebswelle auf gleiche Weise eingeschaltet werden.

Obschon das mechanische Stellmittel aufweisende Vertielergetriebe gegenüber dem elektromagnetisch verstellbaren Verteilergetriebe hinsichtlich des Platzbedarfes und der wirtschaftlichen, einer Massenproduktion zugänglichen Herstellung sowie im Sinne einer Gewichtseinsparung vorteilhaft ist, so benötigt auch das mechanisch verstell bare Verteilergetriebe einen großen Raumbedarf, da die Anszhl der Bauteile immer noch relativ hoch ist, so daß auch die Herstellungskosten für ein mechanisch betätig-bares Verteilergetriebe immer noch beträchtlich sind.

Aus der DE—B 29 52 030 ist eine Verstellvorrichtung gemäß dem Oberbegriff des Anspürchs 1 für einen Fahrzeugsitz bekannt, bei dem die Abtriebswellen dieser Stellvorrichtung zur Betätigung einzelner Stellmechanismen des Fahrzeugsitzes wechselweise über ein Planetengetriebe angetrieben werden können und somit eine manuell oder motorisch aufgebrachte Antriebsleistung wahlweise an verschiedene Sitzstelleinrichtungen verteilt werden kann. Allerdings lassen sich die Planetenträger dieser vorbekannten Lösung aufgrund der Ausbildung des mit dem Planetenträger zusammenwirkenden Steuerteiles nur verschwenken und nicht in Umlauf bringen, so daß mit dieser vorbekannten Lösung durch ümläüfenden motorischen Antrieb auswählbare Schaltstellungen nicht erzeugbar sind. Bei der vorbekannten Lösung läßt sich zwar das Sonnenrad motorisch antreiben, jedoch ist die einzelne Stellvorrichtung, die motorisch betrieben werden soll, zuvor manuell-mechanisch mit dem Steuerteil vorzuwählen. Eine vollmotorische

2

Betätigung dieser Verstellvorrichtung mit durch Knopfdruck motorisch auswählbarer Stellvorrichtung und deren über ein Folgeschaltung nachfolgender motorischer Inbetriebnahme ist bei der vorbekannten Lösung nicht möglich. Darüber hinaus erfordert bei der vorbekannten Lösung die Betätigungsmöglichkeit mehrerer Stellvorrichtungen für das Verschieben und das Anheben im vorderen bzw. hinteren Sitzbereich oder auch des gesamten Sitzes eine großvolumige Konstruktion, die sich nicht in eine kompakte Bauform bringen läßt.

Die Aufgabe der vorliegenden Erfindung besteht darin, eine Verstellvorrichtung mit einem Verteilergetriebe der eingangs genannten Art zu schaffen, das eine kompakte Bauform zuläßt und insbesondere einen motorischen Antrieb des Steuerteiles bzw. dessen Antriebsgliedes ermöglicht.

Diese Aufgabe ist mit den im Kennzeichen des Hauptanspruches genannten Merkmalen gelöst. Dadurch ist eine einfache Positionierung des die jeweilige Stelleinrichtung antreibenden Planetenrades möglich, weil der Planetenträger von einer zum Schrittgetriebe gehörenden Blockierscheibe in einer zugehörigen Ruhelage gehaltert werden kann, indem die Blockierscheibe in Blockiernuten des Planetenträgers eingreift und darin durch Abschaltung des Antriebes der Blockierscheibe gehalten werden kann. Damit wird ein motorischer Antrieb für die Auswahl der jeweiligen, zu einer Stellvorrichtung gehörenden Abtriebswelle des Verteilergetriebes möglich. Durch die Kombination des Planetenträgers in der Blockierscheibe läßt sich dafür eine kompakte, wenig Raum beanspruchende Baueinheit schaffen.

Zu Schrittgetrieben gehören Schrittwerkgetriebe, Umlaufrastgetriebe und Summiergetriebe. Obschon sich mehrere Getriebe der vorgenannten Art einsetzen lassen, ist es vorteilhaft, das als Planetenträger fungierende Abtriebsglied durch eine rotatorisch geführte Malteserkreuzscheibe mit radial verlaufenden, nach außen offenen Tranportschlitzen zu bilden. Weitere vorteilhafte Ausgestaltungen ergeben sich aus den in den Unteransprüchen genannten Merkmalen. Eine darüber hinausgehende Weiterbildung des Erfindungsgegenstandes ist aus der europäischen Patentschrift EP—A—0068 223 ersichtlich.

Die Erfindung ist in Ausführungsbeispielen auf der Zeichnung dargestellt und wird nachfolgend näher erläutert. Es zeigen:

Fig. 1 einen in strichpunktierten Linien angedeuteten Fahrersitz, dessen Sitzrahmen über Stellvorrichtungen im hinteren und vorderen Sitzbereich an mit dem Fahrzeugboden verbundenen Konsolen abgestützt ist, in einer Seitenansicht,

Fig. 2 den Sitzrahmen in einer Draufsicht mit den auf einer Längsseite des Sitzes angeordneten Stellvorrichtungen für die Längsverschiebung und die Höhenverstellung des Sitzes sowie mit dem die Stellvorrichtung betätigenden Verteilergetriebe,

Fig. 3 das Verteilergetriebe mit einem eine Außenmalteserkreüzscheibe umfassenden Schrittgetriebe in einem Längsschnitt nach der Linie III—III von Fig. 2 in einem gegenüber dieser vergrößerten Maßstab,

Fig. 4 das aus Fig. 3 ersichtliche Verteilergetriebe, ebenfalls in einem Längsschnitt, jedoch mit zum Antrieb der Höhenverstelleinrichtung verschwenkter Malteserkreüzscheibe,

Fig. 5 das aus den Fig. 3 und 4 ersichtliche Verteilergetriebe in einem Querschnitt nach der Linie V—V von Fig. 3,

Fig. 6 ein weiteres Ausführungsbeispiel eines Verteilergetriebes, das ebenfalls in einem Längsschnitt nach der Linie VI—VI von Fig. 7 dargestellt ist, wobei der Antrieb des Malteserkreuzes über eine Kupplung von einem einzigen Antriebsmotor abgeleitet ist,

Fig. 7 das aus Fig. 6 ersichtliche Ausführungsbeispiel eines Verteilergetriebes in einem Querschnitt nach der Linie VII—VII von Fig. 6,

Fig. 8 einen Stromlaufplan zur Steuerung des aus den Fig. 3 bis 5 ersichtlichen Verteilergetriebes, das neben einem Antriebsmotor für die Abtriebswellen des Verteilergetriebes einen Hilfsmotor für den Antrieb des Malteserkreuzes aufweist,

Fig. 9 ein eine sich rotatorisch bewegende Innenmalteserkreüzscheibe umfassendes Schrittgetriebe in schematischer Darstellung,

Fig. 10 ein als Schubkurbelgetriebe ausgebildetes Außen-Schrittwerkgetriebe in schematischer Darstellung,

Fig. 11 ein ebenfalls schematisch als Schubkurbelgetriebe dargestelltes Schrittwerkgetriebe, dessen Abtriebsglied jedoch als zur Innenseite offene, Transportschlitze aufweisende Scheibe ausgebildet ist,

Fig. 12 ein als Kurven-Schrittwerkgetriebe ausgebildetes Schrittgetriebe mit Kurvenscheiben und Transportschwinge in schematischer Darstellung und

Fig. 13 ein schematisch dargestelltes, als Kurven-Umlaufrastgetriebe ausgebildetes Schrittgetriebe, dessen Abtriebsglied mit einem Rollensatz drehverbunden ist.

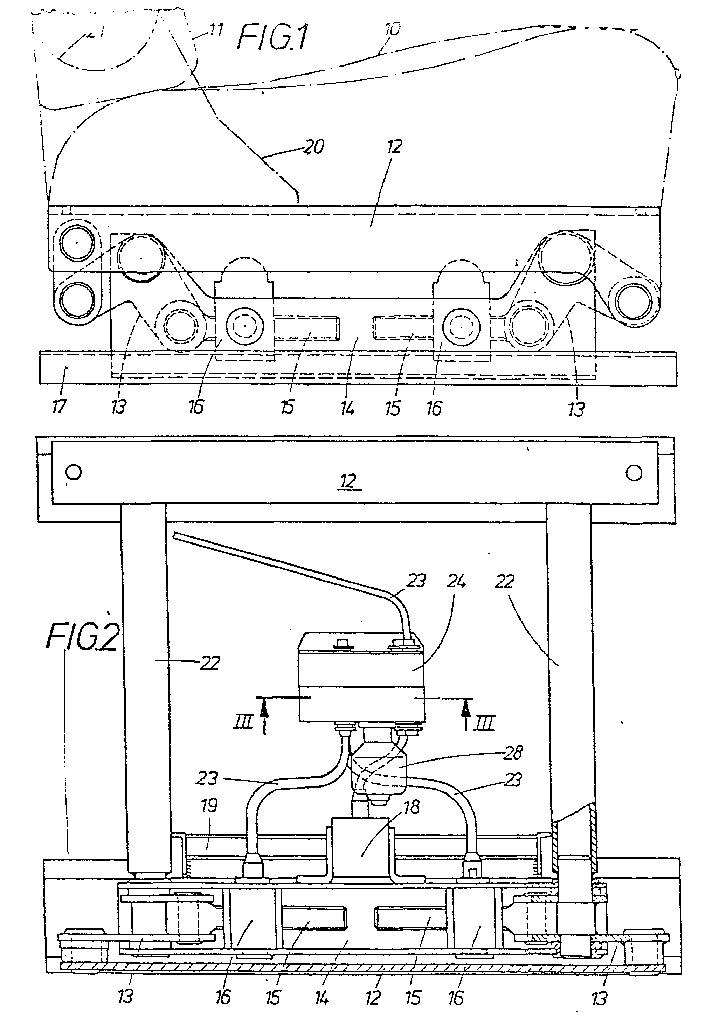

Der in Fig. 1 als eines der möglichen Einbaubeispiele für ein Verteilergetriebe dargestellte, einen Sitzteil 10 und eine Rückenlehne 11 umfassende Fahrzeugsitz ist auf einem Sitzrahmen 12 angeordnet. Dieser Sitzrahmen 12 ist im vorderen und hinteren Sitzbereich über Schwenkstützen 13 an mit am Fahrzeugaufbau festgelegten Führungsschienen 17 verbundenen Konsolen 14 drehgelenkig abgestützt. Während die beispielsweise als Winkelhebel ausgebildeten Schwenkstützen 13 mit ihrem einen Hebelarm an dem Sitzrahmen 12 angelenkt sind, ist ihr anderer Hebelarm mit den Gelenkaugen von Gewindespindeln 15 drehbar verbunden. Diese Gewindespindeln sind von in Stellvorrichtungen 16 bildenden Schneckentrieben angeordneten Muttern umfaßt, wobei jede Mutter an ihrem Außenumfang mit einer Schneckenradverzahnung versehen ist, in welche zum Beispiel eine in der Stellvorrichtung 16 gelagerte Schnecke eingreift. Eine weitere Stellvorrichtung 18, die beispielsweise ebenfalls als Schneckentrieb ausgebildet sein kann, dient der Längsverschiebung des Sitzrahmens 12, indem die als Schneckenrad ausgebildete Spindelmutter eine ortsfest angeordnete Gewindestange 19 umfaßt. Zur Verstellung der Rückenlehne 11 mag der zwischen dem Sitzteil 10 und der Rückenlehne 11 angeordnete Gelenkbeschlag eine ebenfalls motorisch betreibbare, in gestrichelten Linien in Fig. 1 angedeutete Stellvorrichtung 21 umfassen. Die Stellvorrichtung 18 ist wenigstens auf einer Sitzlängsseite angeordnet. Auch die Stellvorrichtungen 16 und 21 können auf nur einer Sitzlängsseite angeordnet sein, während die Stellbewegungen an die andere Sitzlängsseite mittels Übertragungswellen 22 weitergegeben werden können. Die Stellvorrichtungen 16, 18 und 21 stehen über flexible Wellen 23 in Drehverbindung mit einem beispielsweise im mittleren Bereich des Sitzrahmens angeordneten Verteilergetriebe 24.

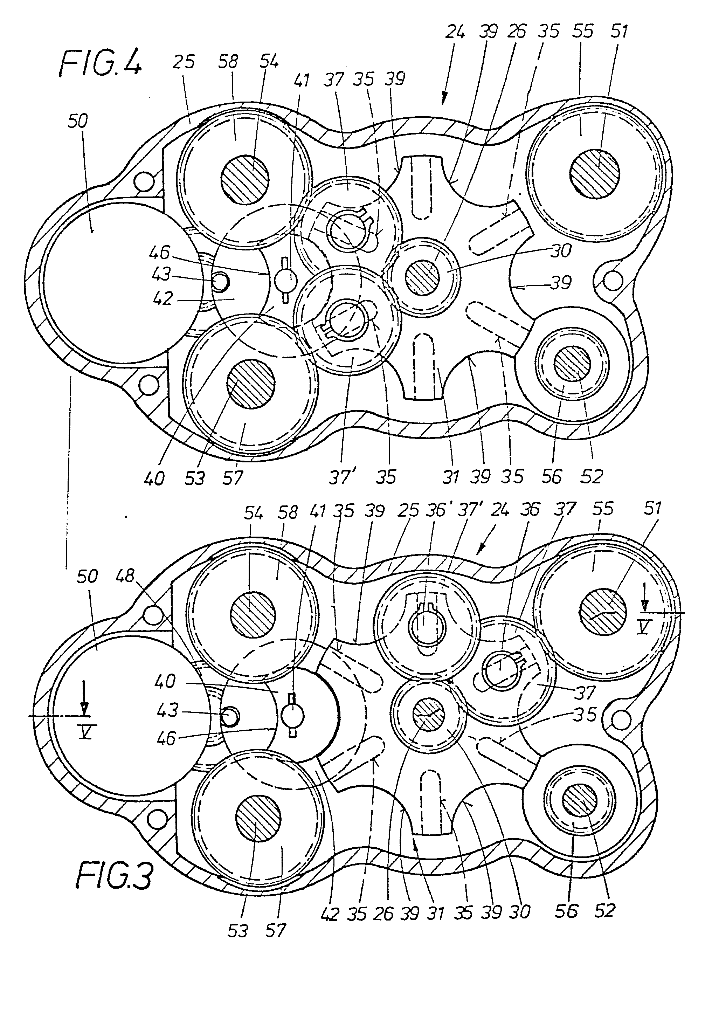

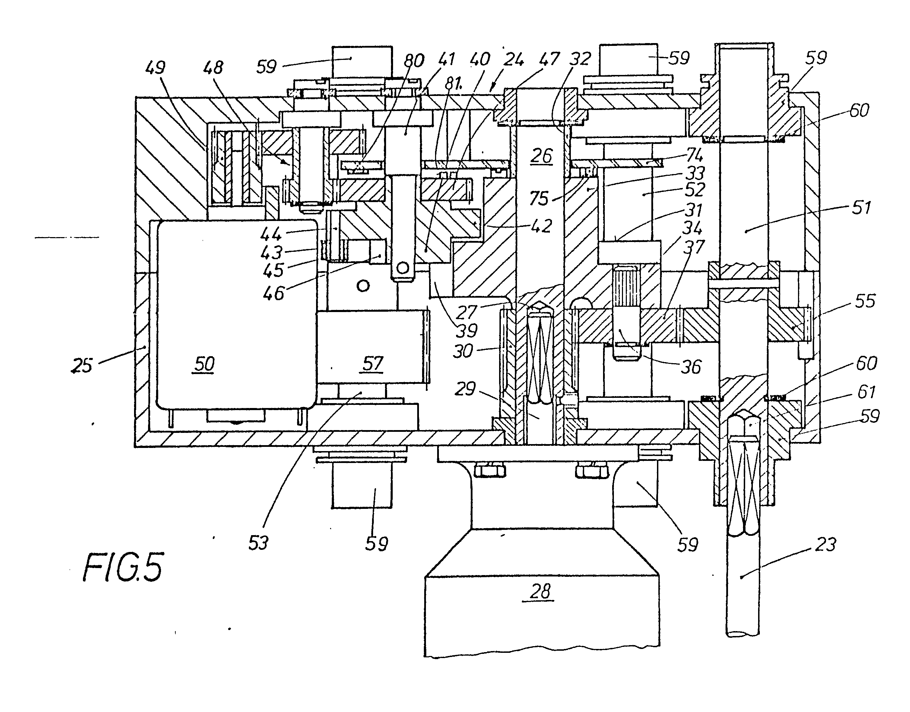

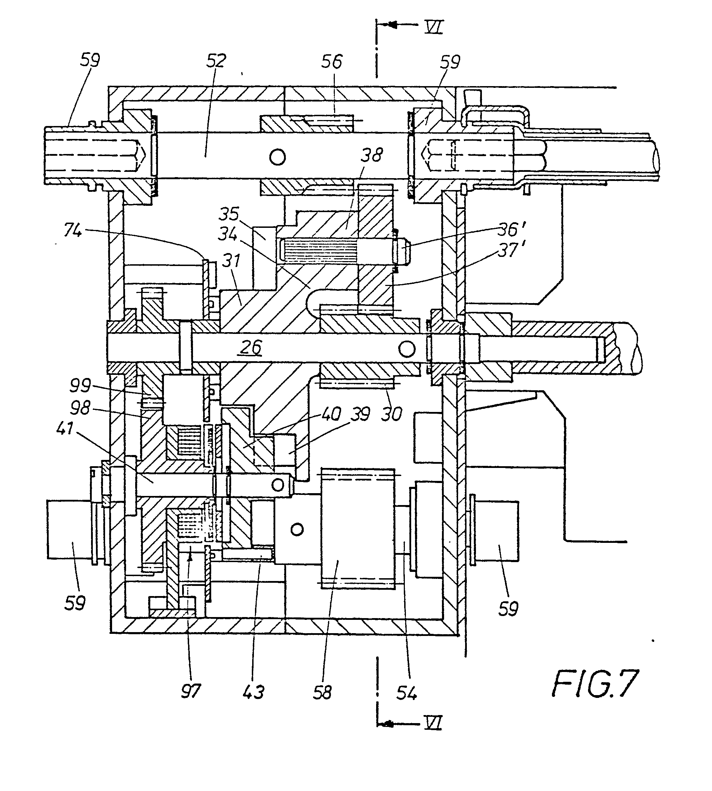

Ein Ausführungsbeispiel dieses Verteilergetriebes ist in den Fig. 3 bis 5 dargestellt und umfaßt ein Gehäuse 25, dessen mittlerer Bereich von einer Antriebswelle 26 durchquert wird, die in gegenüberliegenden Seitenwandungen des Gehäuses 25 drehbar gelagert ist. Die Antriebswelle 26 weist, wie insbesondere aus Fig. 5 ersichtlich ist, auf wenigstens einer Seite eine unrunde Bohrung 27 auf, in welche ein mit dem Hauptantriebsmotor 28 gekuppelter Wellenstumpf 29 pasend eingreift. In Fig. 5 ist ein Flanschmotor 28 dargestellt, dessen Wellenstumpf unmittelbar in die Antriebswelle 26 drehmomentübertragend eingreift. Es versteht sich jedoch, daß statt eines an dem Gehäuse 25 befestigten Flanschmotors 28 auch ein separat, an beispielsweise einer Konsole, festgelegter Antriebsmotor Verwendung finden kann, der dann über eine Kupplungswelle zur Drehmomentübertragung mit der Antriebswelle 26 verbunden ist. Unmittelbar neben der dem Hauptantriebsmotor 28 benachbarten Lagerbuchse des Gehäuses 25 ist mit der Antriebswelle 26 ein Antriebsritzel 30 drehfest verbunden. Neben diesem Antriebsritzel 30 ist auf der Antriebswelle 26 lose drehbar eine Malteserscheibe 31 gelagert, die in axialer Richtung auf der Antriebswelle 26 durch Anlage am Antriebsritzel 30 einerseits und durch einen sich über einen Sicherungsring an einer im Gehäuse 25 festgelegten Lagerbuchse andererseits abstützenden Distanzring 32 unverschiebbar angeordnet ist. Die eine auf der am Antriebsritzel 30 abgekehrten Seite eine Lagernabe 33 aufweisende Malterserscheibe weist in seinem Scheibenteil 34 radial von der Lagernabe 33 nach außen sich erstreckende Transportschlitze 35 auf, wobei bei dem dargestellten Ausführungsbeispiel sechs Transportschlitze 35 gleichmäßig um Umfang der Malteserscheibe 31 angeordnet sind. In gleicher Ebene mit wenigstens einem Transportschlitz 35 ragt auf der dem Antriebsritzel 30 zugekehrten Seite aus dem Scheibenteil 34 des Malteserkreuzes 31 ein Lagerzapfen 36 aus, auf dem ein Zwischenrad 37 lose drehbar gelagert ist, das in ständigem Eingriff mit dem Antriebsritzel 30 bleibt. Obschon in vielen Fällen ein einziges an der Malteserscheibe 31 gelagertes Zwischenrad 37 die Zwecke des Verteilergetriebes zu erfüllen vermag, ist aus später noch zu erläuternden Gründen unmittelbar neben dem Zwischenrad 37 in mit dem Teilungswinkel der Transportschlitze übereinstimmendem Abstand am Scheibenteil 34 des Malteserscheibe ein weiterer Lagerzapfen 36' zur Aufnahme eines weiteren Zwischenrades 37' angeordnet. Dabei ist der Lagerzapfen 36' zum einen etwas länger als der Lagerzapfen 36 und der Scheibenteil 34 weist im Bereich des Lagerzapfens 36' einen Vorsprung 38 auf, der um das Maß der Zahnbreite des Zwischenrades 37 über das Antriebsritzel 30 vorragt, wie insbesondere aus Fig. 7 ersichtlich ist. Demnach sind die Zwischenräder 37 und 37' in axialer Richtung gegeneinander um ihre Zahnbreite versetzt angeordnet und greifen beide in das eine entsprechende Zahnbreite aufweisende Antriebsritzel 30 ein. Während die Transportschlitze 35 nur auf einem der Lagernabe 33 benachbarten Teilbereich der Breite des Scheibenteiles 34 angeordnet sind, befinden sich am Umfang des Scheibenteiles 34 zwischen den Transportschlitzen 35 als Zylinderabschnitte ausgebildete Blockiernuten 39.

In der horizontalen Ebene des Verteilergetriebes in neben der Malteserscheibe 31 eine Blockierscheibe 40 derart auf einer an der Gehäusewandung festgelegten Drehachse 41 angeordnet, daß ein zylindricher Abschnitt dieser Blockierscheibe 40 schließend in die Blockiernut 39 der Malteserscheibe eingreifen kann. Seitlich neben dem Scheibenteil 34 der Malteserscheibe 31 greift ein Bund 42 der Blockierscheibe 40, an dem ein Transportfinger 43 befestigt ist, der aus einem in den Bund 42 gehalterten Zapfen 44 und einer auf dem freien Ende des Zapfens gelagerten, eine geräuschdämpfende Ummantelung aufweisende Wälzhülse 45 besteht, welche in die Transportschlitze 35 der Malteserscheibe 31 paßt. Die das freie Ende des Transportfingers 43 bildende Wälzhülse 45 ist von einer Kreisausnehmung 46 am eigentlichen Blockierscheibenteil 40 umgeben, wobei die Kreisausnehmung derartig gestaltet ist, daß beim Eindringen des Transportfingers 43 in den jeweiligen Transportschlitz 35 der Malteserscheibe dessen Außenumfang zur Drehung freigegeben ist. Die in Axialer Richtung auf der Drehachse 41 lose drehbar festgelegte Blockierscheibe 40 ist mit einem Zahnrad 47 drehfest verbunden, das über ein Zahnradvorgelege 48 mit dem Ritzel 49 eines beispielsweise elektrisch betriebenen Hilfsmotors 50 in Drehverbindung steht.

Um die Malteserscheibe 31 herum sind bei dem dargestellten Ausführungsbeispiel vier Abtriebswellen 51, 52, 53 und 54 gruppiert, wobei mit jeder Abtriebswelle ein Zahnrad 55, 56, 57 oder 58 drehfest verbunden ist. Dabei sind die Abtriebswellen 51 bis 54 derart im Gehäuse 25 des Verteilergetriebes gelagert, daß zwei einander diametral gegenüberliegende Abtriebswellen, wie beispielsweise die Abtriebswellen 51 und 53, bzw. die Abtriebswellen 52 und 54, in einer Ebene mit zwei einander gegenüberliegenden Transportschlitzen 35 des in Blockierstellung befindlichen Malteserscheibe liegen. Dabei wurde eine Malteserscheibe gewählt, welche sechs gleichmäßig am Umfang verteilte Transportschlitze 36 und demgemäß auch sechs dazwischenliegende Blockiernuten 39 aufweist. Die Blockierlage der Malteserscheibe wurde dabei so gewählt, daß immer zwei einander gegenüberliegende Transportschlitze in senkrechter Richtung liegen, während die beiden anderen Transportschlitzpaare in einer jeweils um 30° aus der Horizontalen geneigten Ebene angeordnet sind. In den gleichen beiden geneigten Ebenen liegen auch die Abtriebswellen 51 und 53 bzw. die Abtriebswellen 52 und 54, während sich das Antriebsritzel 30, die Blockierscheibe 40 und der Hilfsmotor 50 in der horizontalen Ebene befinden. Wie deutlich aus den Fig. 3 und 4 entnommen werden kann, weisen die Zahnräder 55 und 56 unterschiedliche Wälzkreise auf, wodurch das Übersetzungsverhältnis zwischen dem Antriebsritzel 30 und dem Abtriebszahnrad 55 verschieden von dem Übersetzungsverhältnis zwischen dem Antriebsritzel 30 und dem Abtriebszahnrad 56 ist. Ein anderes Übersetzungsverhältnis erfordert jedoch wegen des konstanten Wälzkreises der Zwischenräder 37 und 37' verschieden große Achsabstände zwischen der Antriebswelle 26 und der Abtriebswelle 51 einerseits, sowie der Antriebswelle 26 und der Abtriebswelle 52 andererseits. Während die Abtriebswelle 51 über eine flexible Welle 23 zur Drehverbindung mit der Stellvorrichtung 21 für die Neigungsverstellung der Rückenlehne herangezogen werden mag, kann die Abtriebswell 52 über ebenfalls eine flexible Welle 23 mit der Stellvorrichtung 18 für die Längsverstellung des Sitzteiles benutzt werden. Die Zahnräder 55 und 56 weisen dabei eine solche Zahnbreite auf, die der Zahnbreite eines Zwischenrades 37 bzw. 37' entspricht.

Während vorgesehen ist, daß die Antriebswellen 51 und 52 nicht gleichzeitig, sondern nacheinander angetrieben werden, weisen die Zahnräder 57 und 58 doppelte Zahnbreite auf, wie die Zwischenräder 37 und 37'. Wenn nun die Malteserscheibe in einer solchen Stellung, wie in Fig. 4 dargestellt, blockiert ist, werden über die Zwischenräder 37 und 37' beide Abtriebswellen 53 und 54 gleichzeitig angetrieben. Wenn nun die Abtriebswelle 53 beispielsweise über eine flexible Welle 23 mit der Stellvorrichtung für die Hubbewegung des vorderen Sitzbereiches und die Abtriebswelle 54 mit der Stellvorrichtung 16 für die Hubbewegung des hinteren Sitzbereiches verbunden ist, so läßt sich je nach Drehrichtung des Antriebsritzels 30 der Fahrzeugsitz in seiner Gesamtheit anheben oder absenken. Wenn jedoch nur der vordere oder der hintere Sitzbereich verstellt werden soll, ist die Malteserscheibe in eine solche Lage geschwenkt, daß entweder das Zwischenrad 37' nur mit dem Zahnrad 58 in Eingriff ist, oder aber das Zwischenrad 37 in Drehverbindung nur mit dem Zahnrad 56 steht. Dabei versteht es sich, daß die Zahnräder 57 und 58 sowie die Zwischenräder 37 und 37' in der gleichen Ebene angeordnet sind, wie das Antriebsritzel 30. Die Zahnräder 56 und 55 sind in der gleichen Ebene mit dem Zwischenrad 37 angeordnet und mit den Abtriebswellen 51 und 52 drehfest verbunden. Jede der vier Abtriebswellen 51 bis 54 ist beiderseits in Lagerbuchsen 59 gelagert, wobei diese Lagerbuchsen in einander gegenüberliegenden Seitenwandungen des bei dem dargestellten Ausführungsbeispiel in Längsmitte geteilten Gehäuses 35 festgesetzt sind. Die in axialer Lage über Sicherungsringe 60 gehalterten Abtriebswellen überragen zwar beiderseits das Gehäuse 25 des Verteilergetriebes, jedoch ragen die Enden der Abtriebswellen 51 bis 54 nicht über eine an jeder Lagerbuchse 59 angeformte Schutzhülse hinaus. Zur Übertragung eines Drehmomentes sind die Enden einer jeden Abtriebswelle 51 und 54 mit einer unrunden Bohrung 61 versehen, in welcher ein passender Mitnehmer zapfen einer flexiblen Welle 23 drehmomentübertragend aufgenommen werden kann, wie insbesondere am Unterende der in Fig. 5 dargestellten Abtriebswelle 51 dargestellt ist.

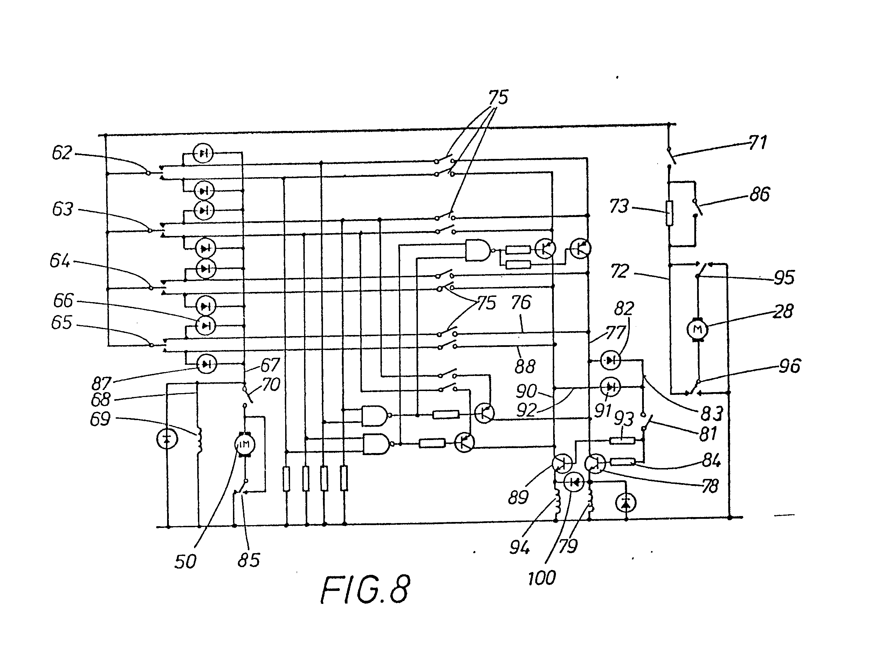

Die Funktionsweise dieses Verteilergetriebes sei unter Zuhilfenahme des in Fig. 8 dargestellten Schaltplanes erläutert. Mit einem der manuell betätigbaren Zweiwegeschalter 62, 63, 64 oder 65 wird die Sitzverstellung und damit der Betrieb des Verteilergetriebes 24 eingeleitet. Dabei mag der Zweiwegeschalter zur Inbetriebnahme der die vordere Sitzhöhenverstellvorrichtung 16 antreibenden Abtriebswelle 53 zugeordnet sein, während mit dem Zweiwegeschalter 63 die Abtriebswelle 54 zur Betätigung der hinteren Sitzhöhenverstellungsvorrichtungen 16 geschaltet werden mag. Die Betätigung beider Schalter 62 und 63 gleichzeitig und im gleichen Sinne erlauben eine Anhebung bzw. Absenkung des Sitzes. Mit dem Zweiwegeschalter 64 ließe sich dann die Abtriebswelle 52 zur Verschiebung des gesamten Fahrzeugsitzes in eine Drehbewegung versetzen, während schließlich mit dem Zweiwegeschalter 65 die Abtriebswelle 51 in Drehbewegung versetzt werden kann, um dadurch eine Schwenkbewegung der Rückenlehne 11 zu ermöglichen. Die Betätigung des Schalters 65 zur Neigungsverstellung der Rückenlehne mag zur Erläuterung der Funktion des Verteilergetriebes dienen. Wenn der im Stromlaufplan der Fig. 8 dargestellte Zweiwegeschalter 65 aus seiner der Nullage entsprechenden Mittelstellung nach oben geschwenkt wird, fließt zunächst ein Strom über die Diode 66 und die Leitungen 67 und 68 zum Relais 69, welches den Schalter 70 zum Hilfsmotor 50 schließt. Damit wird dieser Hilfsmotor in Bewegung gesetzt. Gleichzeitig wird durch das Relais 69 der Schalter 71 geschlossen, so daß über die Hauptleitung 72 und den zwischengeschalteten Widerstand 73 der Hauptmotor 28 mit langsamer Geschwindigkeit in Bewegung gesetzt wird, um durch ein langsame Drehbewegung der Zwischenräder 37 und 37' das Ineinandergreifen des Zähne von Zwischenrad und Zahnrad 55 zu erleichtern. Mit der Einschaltung des Hilfsmotors 50 wird über das Zahnradvorgelege 48 und das Zahnrad 47 die Blockierscheibe 40 gedreht, die ihrerseits mit ihrem Transportfinger 43 in den nächstgelegenen Transportschlitz 35 der Malteserscheibe 31 eingreift und diese um einen Schaltschritt weiter dreht, wobei dieser Schaltschritt bei der dargestellten Malteserscheibe 60° Drehwinkel beträgt. Bei Drehung der Malteserscheibe 31 wird ein daran befestigter Bürstensatz an einer Leiterkarte 74 im Verteilergetriebe vorbeigedreht, wobei die den Schalter 75 bildenden Leiterbahnen geschlossen werden, so daß ein Strom durch die Leitungen 76 und 77 zum Transistor 78 fließen kann, hinter welchen ein weiteres Relais 79 geschaltet ist. Dieses Relais 79 ist jedoch solange stromlos, als dem Transistor 78 die Steuerspannung fehlt. Der sich drehenden Blockierscheibe 40 ist ein Schalter 80 zugeordnet, der einen Kontakt 81 in einer Leitung 83 schließt, die eine Diode 82 aufweist und parallel zur Leitung 77 verläuft. Mit der Leitung 83 ist ein dem Transistor 78 vorgeschalteter Widerstand 84 verbunden, so daß der Transistor 78 seine Steuerspannung über den Kontakt 81 erhält. Somit kann der zuvor in der Leitung 77 am Transistor 78 an stehende Strom zum Relais 79 und über die Diode 100 zum Relais 94 fließen und diese Relais betätigen. Das Relais 79 betätigt die Schalter 95 und 96 und polt damit den Motor 28 so, daß die der oberen Schaltstellung des Schalters 65 entsprechende Hubrichtung ausgeführt wird. Das Relais 94 betätigt den Schalter 85 und schließt damit den Hilfsmotor 50 kurz, wodurch eine Weiterdrehung der Malteserscheibe 31 beendet wird. Ferner wird ebenfalls der Schalter 86 geschlossen, wodurch der Widerstand 73 überbrückt wird und der Motor 28 auf volle Drehzahl hochläuft. Durch entsprechende Anordnung der die Schalter 75 bildenden Bürstensätze läßt sich die exakte Position der Malteserscheibe 31 ansteuern, so daß bei Betätigung des Schalters 65 in der oben beschriebenen Weise die Malteserscheibe in der aus aus den Fig. 3 und 5 ersichtlichen Lage festgelegt ist. Dadurch wird die vom Hauptmotor 28 in das Motorritzel 30 eingeleitete Antriebsbewegung über das Zwischenrad 37 auf das Zahnrad 55 und die damit drehfest verbundene Abtriebswelle 51 übertragen. Die Verstellbewegung wird beendet, indem man den Schalter 65 in Mittelstellung bringt, wodurch das Relais 69 stromlos wird, der Schalter 71 öffnet und damit die Stromzufuhr zum Hauptmotor 28 unterbricht. Soll jedoch die Rückenlehne in der anderen Richtung verschwenkt werden, so ist der Schalter 65 nach unten zu betätigen, so daß der Leitung 67 über die Diode 87 Strom zugeführt wird. Dabei wird der Hilfsmotor—für den Fall, daß die zuvor ausgeführte Verstellung eine Rückenlehnenverstellung war—nicht aktiviert, da zwar der Schalter 70 durch das Relais 69 geschlossen wird, aber gleichzeitig der Schalter 85 durch das Relais 94 den Motor 50 kurzschließt. Wenn jedoch vorher eine andere Vestellung stattfand, wird der Hilfsmotor 50 in der gleichen Weise betätigt, wie oben bereits beschrieben worden ist. Jedoch fließt der Strom durch die von der Malteserscheibe 31 verursachte Schließung des Schalters 75 durch die Leitung 88 und wird dem Transistor 89 über die Leitung 90 zugeführt. Gleichzeitig ist mit der Leitung 90 die eine Diode 91 aufweisende Leitung 92 verbunden, die an die Leitung 83 angeschlossen ist. Durch auf der Blockierscheibe 40 bzw. dem Zahnrad 47 befestigte Bürsten 80 wird auf der Leiterkarte 74 der unterbrochene Leiterzug 81 geschlossen. Da-durch wird das Relais 94 betätigt, wodurch der Hilfsmotor 50 durch den Schalter 85 kurzgeschlossen und der Vorwiderstand 73 durch den Schalter 86 überbrückt wird, so daß der Hauptmotor 28 mit voller drehzahl läuft.

Auch die Betätigung eines anderen Schalters, wie beispielsweise des Schalters 62, 63 oder 64 im zuvor beschriebenen einen oder anderen Schaltsinn analog der Schalterbetätigung 65, laufenentsprechend der zuvor beschriebenen Steuerung analoge Schaltbewegungen ab, wobei jedoch jedem der Schalter 62 bis 65 eine bestimmte Halteposition der Malteserscheibe 31 zugeordnet ist.

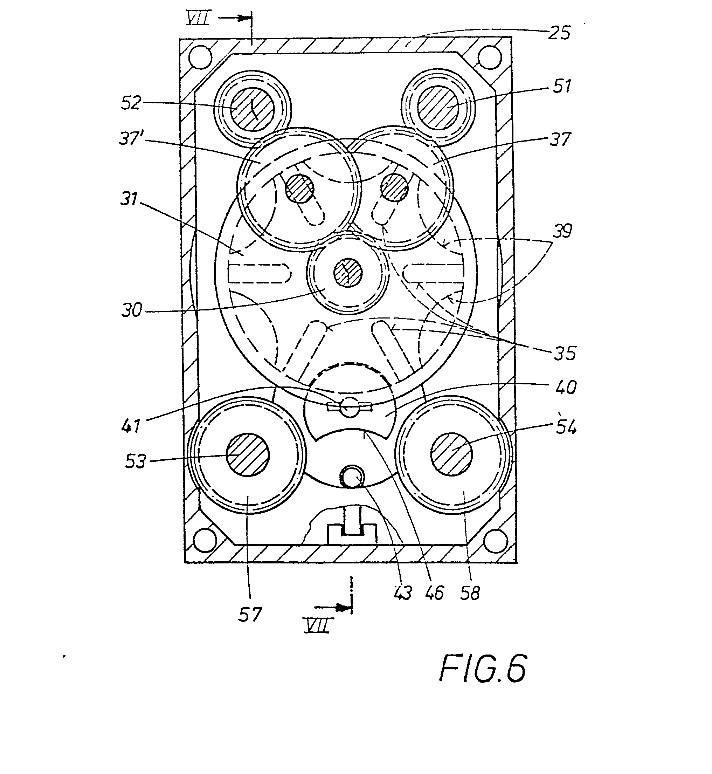

Im Unterschied zu dem aus den Fig. 3 bis 5 ersichtlichen Ausführungsbeispiel ist bei dem aus den Fig. 6 und 7 ersichtlichen Ausführungsbeispiel der Hilfsmotor durch eine auf die Blockierscheibe 40 einwirkende Elektromagnetkupplung 97 ersetzt, so daß die Blockierscheibe 40 mit einem auf gleicher Drehachse 41 drehbaren Zahnrad 98 kuppelbar ist. Dieses Zahnrad 98 kämmt mit einem auf der Antriebswelle 26 drehfest angeordneten Ritzel 99, so daß bei geschalteter Kupplung 97 die Blockierscheibe 40 in Abhängigkeit von der Antriebswelle 26 gedreht wird. Die übrigen Bauteile sind ähnlich denjenigen, die bei dem Ausführungsbeispiel gemäß den Fig. 3 und 5 eingesetzt sind und stimmen sogar weitgehend mit diesen überein. Die Funktionsweise des aus den Fig. 6 und 7 ersichtlichen Ausführungsbeispieles ist analog der Funktionsweise des Ausführungsbeisieles gemäß den Fig. 3 bis 5 zu verstehen, wobei statt des Hilfsmotors die Elektromagnetkupplung 97 geschaltet und somit der Antrieb von Blockierscheibe und Malteserscheibe von der Hauptantriebswelle 26 abgeleitet wird.

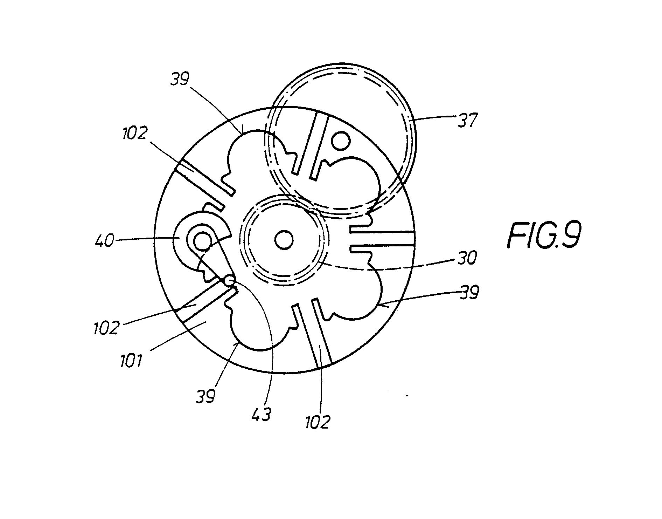

Bei den vorbeschriebenen Ausführungen sind als Maltesergetriebe ausgebildete Schrittwerkgetriebe verwendet, deren Abtriebsglied 31 als Malteserscheibe mit nach außen offenen Transportschlitzen 35 versehen ist. Es ist jedoch auch denkbar, das Maltesergetriebe aus einer Malteserscheibe 101 zu bilden, deren Transportschlitze 102 nach innen offen sind, so daß die Malteserscheibe ringförmig gestaltet ist und in ihrem Innenraum die Blockierscheibe 40 mit ihrem Blockierfinger 43 aufnimmt, wobei innenseitig auch die Blockiernuten 39 angeordnet sind, wie aus der Fig. 9 entnommen werden kann. An der das Abtriebsglied des Innenmaltesergetriebes darstellenden Malteserscheibe 101 ist auch wenigstens ein Zwischenrad 37 gelagert, das mit dem Antriebsritzel 30 kämmt.

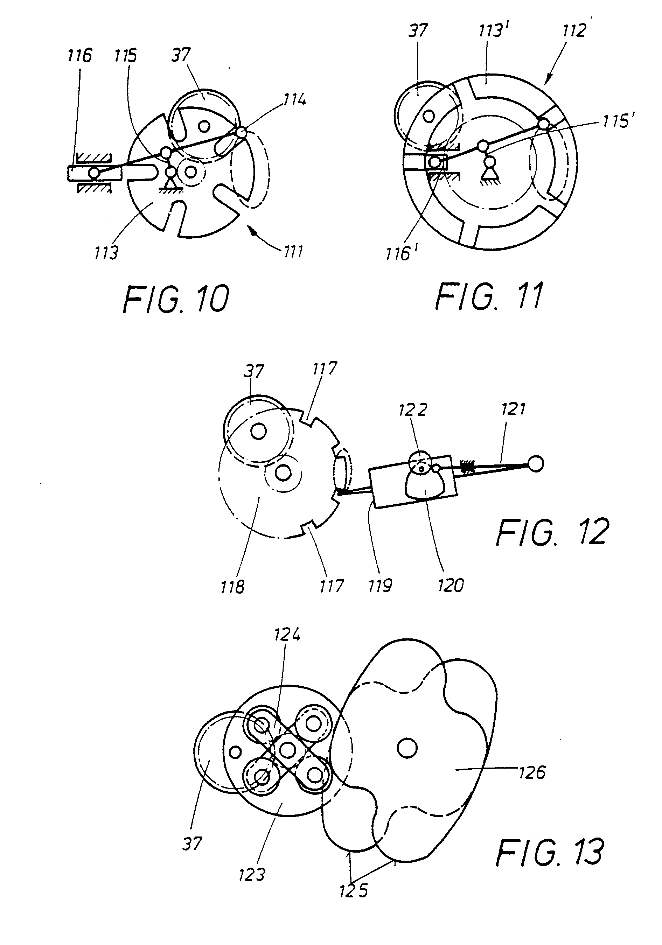

Die Fig. 10 und 11 zeigen schematisch als Schrittgetriebe fungierende Schubkurbelgetriebe 111 und 112, von denen das in Fig. 11 dargestellte, scheibenförmige Abtriebsglied 113 nach außen offene Transportschlitze aufweist, in die ein Mitnehmer 114 einer an einer Kurbel 115 gelagerten Schubstange eingreift, die andernends an einem Schubglied 116 angelenkt ist, das seinerseits zur Sperrung in die Transportschlitze des Abtriebsgliedes 113 eingreifen kann. Das aus Fig. 11 ersichtliche Schubkurbelgetriebe 112 weist ein Abtriebsglied 113′ auf, dessen Transportschlitze innenseitig offen sind, so daß die Schubstange mit dem Schubglied 116′ und die Kurbel 115′ im Vergleich zum Abtriebsglied 112′ innenseitig gelagert sind. Auch bei diesen Schubkurbelgetrieben ist wenigstens ein Zwischenrad 37 am Abtriebsglied 113 bzw. 113′ gelagert und kämmt ständig mit einem zentrisch angeordneten Antriebsritzel.

Das in Fig. 12 schematisch dargestellte Schrittgetriebe ist als Kurvenschrittwerkgetriebe ausgebildet, dessen Transportlücken 117 aufweisendes Abtriebsglied 118 von einer Transportschwinge 119 schrittweise verdreht werden kann. Diese Transportschwinge 119 läßt sich einerseits durch eine Kurvenscheibe 120 auf und ab bewegen, während sie andererseits mit einer Schubstange 121 drehgelenkig verbunden ist, die sich an einer zweiten Kurvenscheibe 122 abstützt, durch welche die Transportschwinge 119 über die Schubstange 121 hin- und herbewegt werden kann. Dabei kommt die als gestrichelte Elipse gezeichnete Bewegungsbahn zustande.

Bei dem in Fig. 13 schematisch dargestellten Schrittgetriebe handelt es sich um ein Kurven-Umlaufrstgetriebe, dessen Abtriebsglied einerseits wiederum wenigstens ein Zwischenrad 37 drehgelagert aufnimmt und andererseits einen Rollensatz 124 umfaßt. Dieser Rollensatz wälzt sich an der Kurvenbahn 125 einer Transportscheibe 126 ab, wobei durch die gesalt der Kurve ein gewünschter Transportschritt erzielt wird.

Wie bereits erwähnt, geben die dargestellten und zuvor beschriebenen Ausführungen die Erfindung lediglich beispielsweise wieder, die keinesfalls allein darauf beschränkt ist. So ist beispielsweise die Anzahl der Abtriebswelle nicht auf die dargestellte Anzahl von vier Abtriebswellen beschränkt. Es ließen sich beispielsweise bei den beiden dargestellten und vorbeschriebenen Ausführungsbeispielen zwei weitere Abtriebswellen diametral einander gegenüberliegend in senkrechter Ebene anordnen, ohne daß in diesem Fall die Malteserkreüzscheibe selbst vergrößert werden müßte, wenn die elektrische Schaltung entsprechend angepaßt wird. Mit den zusätzlichen Abtriebswellen könnte beispielsweise zum einen eine Kopfstützenverstellung bewirkt werden, und zum anderen ließe sich beispielsweise eine Pumpe antreiben, um das Rückenpolster des Sitzes der Sitzhaltung des Sitzbenutzers nachzuführen.

# 0 067 893

Bezugszeichenliste

| | | | | |
|---|---|---|---|---|
| 10 | Sitzteil | 68 | Leitung |
| 11 | Rückenlehne | 69 | Relais |
| 12 | Sitzrahmen | 70 | Schalter |
| 13 | Schwenkstütze | 71 | Schalter |
| 14 | Konsole | 72 | Hauptleitung |
| 15 | Gewindespindel | 73 | Widerstand |
| 16 | Stellvorrichtung | 74 | Leiterkarte |
| 17 | Führungsschiene | 75 | Schalter/Bürstensatz |
| 18 | Stellvorrichtung | 76 | Leitung |
| 19 | Gewindestange | 77 | Leitung |
| 20 | Gelenkbeschlag | 78 | Transistor |
| 21 | Stellvorrichtung | 79 | Relais |
| 22 | Übertragungswelle | 80 | Leiterbahn |
| 23 | flexible Welle | 81 | Leiterzug |
| 24 | Verteilergetriebe | 83 | Leitung |
| 25 | Gehäuse | 84 | Widerstand |
| 26 | Antriebswelle | 85 | Schalter |
| 27 | Bohrung, unrund | 86 | Schalter |
| 28 | Hauptantriebsmotor | 87 | Diode |
| 29 | Wellenstumpf | 88 | Leitung |
| 30 | Antriebsritzel | 89 | Transistor |
| 31 | Malteserkreüzscheibe/Abtriebsglied | 90 | Leitung |
| 31¹ | Abtriebsglied, translatorisch | 91 | Diode |
| 32 | Distanzhülse | 92 | Leitung |
| 33 | Lagernabe | 93 | Widerstand |
| 34 | Scheibenteil | 94 | Relais |
| 35 | Transportschlitz | 95 | Schalter |
| 36 | Lagerzapfen | 96 | Schalter |
| 36¹ | Lagerzapfen | 97 | Elektromagnetkupplung |
| 37 | Zwischenrad | 98 | Zahnrad |
| 37¹ | Zwischenrad | 99 | Ritzel |
| 38 | Vorsprung | 100 | diode |
| 39 | Blockiernut | 101 | Malteserkreüzscheibe |
| 40 | Blockierscheibe | 102 | Transportschlitze |
| 41 | Drehachse | 103 | Transportschlitz |
| 42 | Bund | 104 | Lagerträger |
| 43 | Transportfinger | 105 | Antriebsritzel |
| 44 | Zapfen | 106 | Zahnrad |
| 45 | Wälzhülse | 107 | Zahnrad |
| 46 | Kreisausnehmung | 108 | Zahnrad |
| 47 | Zahnrad | 109 | Zahnrad |
| 48 | Zahnradvorgelege | 110 | Zahnrad |
| 49 | Ritzel | 111 | Schubkurbelgetriebe |
| 50 | Hilfsmotor | 112 | Schubkurbelgetriebe |
| 51 | Abtriebswelle | 113 | Abtriebsglied |
| 52 | Abtriebswelle | 113¹ | Abtriebsglied |
| 53 | Abtriebswelle | 114 | Mitnehmer |
| 54 | Abriebswelle | 115 | Kurbel |
| 55 | Zahnrad | 115² | Kurbel |
| 56 | Zahnrad | 116 | Schubglied |
| 57 | Zahnrad | 116¹ | Schubglied |
| 58 | Zahnrad | 117 | Transportlücke |
| 59 | Lagerbuchse | 118 | Abtriebsglied |
| 60 | Sicherungsring | 119 | Transportschwinge |
| 61 | Bohrung, unrund | 120 | Kurvenscheibe |
| 62 | Zweiwegeschalter | 121 | Schubstange |
| 63 | Zweiwegeschalter | 122 | Kurvescheibe |
| 64 | Zweiwegeschalter | 123 | Abtriebsglied |
| 65 | Zweiwegeschalter | 124 | Rollensatz |
| 66 | Diode | 125 | Kurvenbahn |
| 67 | Leitung | 126 | Doppelkurvenscheibe |

**Patentansprüche**

1. Verstellvorrichtung für einen in Fahrzeugen, insbesondere Kraftfahrzeugen, anzuordnenden Sitz, mit der mehrere Antriebswellen für verschiedene Stellbewegungen über ein Verteilergetriebe (24) alternativ kuppelbar sind, wobei die Verstellvorrichtung ein von einem Motor (28) über sein Antriebsritzel (30) antreibbares Sonnenrad und wenigstens ein damit kämmendes, an einem Planetenträger gelagertes Planetenrad (37) umfaßt, das über einen Steuerteil wahlweise mit dem jeweiligen Zahnrad (55 bis 58) einer der Abtriebswellen (51 bis 54) über einzelne Stellvorichtungen für eine Sitzstellbewegung in Eingriff bringbar ist, wobei der Steuerteil aus einem während seiner Stellphase betätigbaren Antriebsglied (40) gebildet ist, das mit einem während dieser Stellphase drehbaren, jedoch durch Ruhestellungen unterbrochenen, als Planetenträger (31) ausgebildeten Abtriebsglied im Eingriff ist, dadurch gekennzeichnet, daß das Antriebsglied aus einer konstant umlaufenden, mit einer bereichsweisen Kreisausnehmung (46) und einem dazu mittig angeordneten Transportfinger (43) ausgebildeten, als Schrittgetriebe arbeitenden Blockierscheibe (40) besteht, die mit dem ebenfalls umlaufenden Planetenträger (31) in Eingriff steht, welcher Blockiernuten (39) mit dazwischen angeordneten Transportschlitzen (35) aufweist, in die wahlweise der Transportfinger (43) eingreift.

2. Verstellvorrichtung nach Anspruch 1, dadurch gekennzeichnet, daß der wenigstens ein Planetenrad (37) lagernde Planetenfrüger (31) von einer rotatorisch geführten Malteserkreüzscheibe mit radial verlaufenden, nach außen offenen Transportschlitzen (35) gebildet ist.

3. Verstellvorrichtung nach Anspruch 1, dadurch gekennzeichnet, daß der wenigstens ein Planetenrad (37) lagernde Planetenträger (31) von einer rotatorisch geführten Malteserkreüzscheibe (101) mit radial verlaufenden, nach innen offenen Transportschlitzen (102) gebildet ist.

4. Verstellvorrichtung nach Anspruch 2 oder 3, dadurch gekennzeichnet, daß der als Malteserkreüzscheibe ausgebildete planetenträger (31, 101) gleichachsig zum als Sonnenrad fungierenden Antriebsritzel (30) angeordnet ist und zwischen den gleichmäßig am Umfang verteilt angeordneten Transportschlitzen (35, 102) jeweils eine Blockiernut (39) auf der mit den Schlitzöffnungen versehenen Umfangsseite vorgesehen ist, wobei in eine der Blockiernuten (39) die den Transportfinger (43) aufweisende Blockierscheibe (40) eingreift.

5. Verstellvorrichtung nach Anspruch 4, dadurch gekennzeichnet, daß die Blockiernuten (39) in der Umfangsfläche der Malteserkreüzscheibe (31 bzw. 101) als zur Blockierscheibe (40) formschlüssig passende Zylinderabschnitte ausgebildet sind und die am Umfang der Blockierscheibe (40) angeordnete Kreisausnehmung (46) zur Freigabe des Umfanges der Malteserkreuzscheibe (31, 101) bemessen ist und in Verlängerung der Mittenlinie zwischen dem Mittelpunkt der Blockierscheibe (40) und dem Scheitelpunkt der Kreisausnehmung (46) an einem Bund (42) der Blockierscheibe der Transportfinger (43) angeordnet ist.

6. Verstellvorrichtung nach Anspruch 5, dadurch gekennzeichnet, daß der Transportfinger (43) aus einem am Bund (42) der Blockierscheibe (40) festgelegten Zapfen (44) besteht, der auf seinem abragenden Ende von einer in die Transportschlitze (35) der Malteserkreüzscheibe (31, 101) passenden, geräuschdämpfend ummantelten Wälzhülse (45) umfaßt ist.

7. Verstellvorrichtung nach einem oder mehreren der vorhergehenden Ansprüche, dadurch gekennzeichnet, daß an dem als Malteserkreüzscheibe ausgebildeten planetenträger (31) mindestens zwei axial zueinander versetzte und in Umfangsrichtung nebeneinanderliegende, als Zwischenräder fungierende Planetenräder (37, 37') angeordnet sind, von denen jedes bei entsprechender Blockierung des Planetenträgers (31) gleichzeitig mit dem Zahnrad (57) der einen Abtriebswelle (53) und dem Zahnrad (58) der weiteren Abtriebswelle (54) im Eingriff ist.

8. Verstellvorrichtung nach einem oder mehreren der vorhergehenden Ansprüche, dadurch gekennzeichnet, daß die als Steuerteil fungierende Blockierscheibe (40), von einem Hilfsmotor (50) über ein Zahnradvorgelege (48) gesteuert, intermittierend angetrieben ist.

9. Verstellgetriebe nach einem oder mehreren der Ansprüche 1 bis 7, dadurch gekennzeichnet, daß die Blockierscheibe (40) über eine Kupplung (97) einer das Antriebsritzel (30) treibenden Antriebswelle (26) gesteuert zuschaltbar ist.

10. Verstellvorrichtung nach einem oder mehreren der Ansprüche 1 bis 7, dadurch gekennzeichnet, daß die Blockierscheibe (40) zur Betätigung des Planetenträgers (31, 101) manuell antreibbar ist.

11. Verstellvorrichtung nach einem oder mehreren der Ansprüche 1 bis 9, dadurch gekennzeichnet, daß dem Motor (28) für das Antriebsritzel (30) ein dessen Drehzahl drosselnder Widerstand (73) vorgeschaltet ist, der nur während der Laufzeit des Hilfsmotors (50) eingeschaltet bleibt.

12. Verstellvorrichtung nach einem oder mehreren der Ansprüche 1 bis 9, dadurch gekennzeichnet, daß der Blockierscheibe (40) eine Leiterbahn (80) zugeordnet ist, die zu Beginn des Ruhestandes der Blockierscheibe in Verbindung mit Schaltern (75) den Antrieb der Blockierscheibe in Wahlstellung abschaltet und durch Überbrückung des Widerstandes (73) den motor (28) des Antriebsritzels (30) voll einschaltet.

13. Verstellvorrichtung nach einem oder mehreren der Vorhergehenden Ansprüche, dadurch gekennzeichnet, daß eine der Abtriebswellen (51 bis 54) des Verteilergetriebes (24) bedarfsweise mit einem Kompressor zur Sitz-bzw. Rückenkissenanpassung und/oder einer Hydraulikpumpe zur Sitzverstellung in Verbindung steht.

# 0 067 893

**Revendications**

1. Dispositif de réglage pour un siège à installer dans des véhicules, notamment des véhicules automobiles, avec lequel plusieurs arbres d'entraînement pour produire différents mouvements de réglage peuvent être accouplés alternativement par l'intermédiaire d'une transmission de distribution (24), le dispositif de réglage comportant un pignon central pouvant être entraîné par un moteur (28) par l'intermédiaire de son pignon d'entraînement (30) et au moins un satellite (37) en prise avec le pignon central, monté sur un porte-satellites et qui peut être amené en prise, par l'intermédiaire d'une partie de commande, sélectivement avec l'engrenage correspondant (55 à 58) d'un des arbres de sortie (51 à 54) par l'intermédiaire de dispositifs individuels d'actionnement en vue de faire déplacer le siège, la partie de commande étant constituée d'un organe d'entraînement pouvant être actionné pendant sa phase de réglage et qui est en prise avec un organe d'entraînement (40) agencé sous la forme d'un portesatellites (31), pouvant exécuter pendant cette phase de réglage un mouvement de rotation qui est cependant interrompu par des positions de repos, caractérisé en ce que l'organe d'entraînement se compose d'un disque de blocage (40) opérant comme une transmission pas à pas, tournant de façon constante et pourvu d'un évidement circulaire localisé (46) et d'un doigt de transfert (43) disposé au centre, ce disque de blocage étant en prise avec un porte-satellites (31) tournant également et qui comporte des échancrurures de blocage (39) entre lesquelles sont disposées des fentes de transfert (35) dans lesquelles s'engage sélectivement le doigt de transfert (43).

2. Dispositif de réglage selon la revendication 1, caractérisé en ce que le porte-satellites (31) supportant au moins un satellite (37) est constitué par un disque à croix de Malte guidé dans son mouvement de rotation et pourvu de fentes de transfert (35) orientées radialement et ouvertes vers l'extérieur.

3. Dispositif de réglage selon la revendication 1, caractérisé en ce que le porte-satellites (31) supportant au moins un satellite (37) est constitué par un disque à croix de Malte (101) guidé dans son mouvement de rotation et comportant des fentes de transfert (102) orientées radialement et ouvertes vers l'intérieur.

4. Dispositif de rélage selon les revendications 2 ou 3, caractérisé en ce que le porte-satellites (31, 101) agencé comme un disque à croix de Malte est disposé coaxialement au pignon d'entraînement (30) constituant le pignon central et il est prévu, entre chacune des fentes de transfert (35, 102) réparties uniformément sur la périphérie, respectivement une échancrure de blocage (39) sur le côté de la périphérie qui est pourvu des ouvertures en forme de fentes, le disque de blocage (40), comportant le doigt de transfert (43), s'engageant dans une des rainures de blocage (39).

5. Dispositif de réglage selon la revendication 4, caractérisé en ce que les échancrures de blocage (39) prévues dans la surface périphérique du disque à croix de Malte (31 ou 101) sont réalisées sous la forme de sections de cylindres s'adaptant avec conjugaison de formes au disque de blocage 40 et l'évidement circulaire (46) disposé sur la périphérie du disque de blocage (40) est dimensionné de façon à dégager la périphérie du disque à croix de malte (31, 101) et le doigt de transfert (43) est disposé sur le prolongement de la ligne médiane tracée entre le point central du disque de blockage (40) et le sommet de l'évidement circulaire (46) sur un collet (42) du disque de blocage.

6. Dispositif de réglage selon la revendication 5, caractérisé en ce que le doigt de transfert (43) se compose d'un tourillon (4) fixé sur un collet (42) du disque de blocage (40) et qui est entouré, à son extrémité dépassante, par un manchon de roulement (45), s'adaptant dans les fentes de transfert (35) du disque à croix de Malte (31, 101) et entouré d'un revêtement d'amortissement de bruit.

7. Dispositif de réglage selon une ou plusieurs des revendications précédentes, caractérisé en ce qu'il est prévu sur le porte-satellites (31) agencé comme un disque à croix de Malte au moins deux pignons satellites (37, 37') servant d'engrenages intermédiaires décalés axialement l'un par rapport à l'autre et placés l'un à côté de l'autre dans une direction périphérique, chaque pignon satellite étant en prise, lors d'un blocage correspondant du porte-satellites (31), simultanément avec l'engrenage (57) d'un des arbres de sortie (53) et avec l'engrenage (58) de l'autre arbre de sortie (54).

8. Dispositif de réglage selon une ou plusieurs des revendications précédentes, caractérisé en ce que le disque de blocage (40) agencé comme une partie de commande est entraîné par intermittence par un moteur auxiliaire (50) par l'intermédiaire d'une transmission de renvoi à engrenages (48).

9. Dispositif de réglage selon une ou plusieurs des revendications 1 à 7, caractérisé en ce que le disque de blocage (40) peut être accouplé de façon commandée par l'intermédiaire d'un embrayage (97) à un arbre d'entraînement (26) entraînant le pignon d'entrainement (30).

10. Dispositif de réglage selon une ou plusieurs des revendications 1 à 7, caractérisé en ce que le disque de blocage (40) peut être entraîné manuellement pour l'actionnement du porte-satellites (31, 101).

11. Dispositif de réglage selon une ou plusieurs des revendications 1 à 9, caractérisé en ce qu'il est prévu en série avec le moteur (28) pour le pignon d'entraînement (30) une résistance (73) réduisant sa vitesse de rotation et qui reste enclenchée seulement pendant la période de fonctionnement du moteur auxiliaire (50).

12. Dispositif de réglage selon une ou plusieurs des revendications 1 à 9, caractérisé en ce que le disque de blocage (40) est associé à une voie conductrice (80) qui, au début de la periode de repos du disque de blocage, assure en relation avec les interrupteurs (75) l'entraînement du disque de blocage jusque dans une position sélectionnée et qui enclenche complètement, par court-circuitage de la résistance (73), le moteur (28) du pignon d'entraînement (30).

10

13. Dispositif de réglage selon une ou plusieurs des revendications précédentes, caractérisé en ce qu'un des arbres de sortie (51, 54) de la transmission de distribution (24) est relié en cas de besoin avec un compresseur en vue de l'adaptation du coussin d'assise ou du coussin de dossier et/ou à une pompe hydraulique en vue d'une réglage du siège.

**Claims**

1. An adjusting apparatus for a seat which is to be arranged in vehicles, in particular motor vehicles, with which a plurality of drive shafts for various adjusting movements can be alternatively coupled by way of a distributor transmission (24), wherein the adjusting apparatus includes a sun wheel which can be driven by a motor (28) by way of its drive pinion (30), and at least one planet wheel (37) which meshes with the sun wheel and which is mounted on a planet carrier and which can be brought into engagement by way of a control member selectively with the respective gear (55 to 58) of one of the output shafts (51 to 54) by way of individual adjusting devices for a seat adjusting movement, wherein the control member is formed from a drive member (40) which can be actuated during its adjusting phase, the drive member (40) being in engagement with an output member which is rotatable during said adjusting phase but which is interrupted by rest positions and which is in the form of the planet carrier (31), characterised in that the drive member comprises a constantly rotating blocking disc (40) which is formed with a region-wise circular opening (46) and a transport finger (43) arranged centrally with respect thereto and which operates as a stepping transmission and which is in engagement with the planet carrier (31) which also rotates, the planet carrier (31) having blocking grooves (39) with interposed transport slots (35) into which the transport finger (43) selectively engages.

2. An adjusting apparatus according to claim 1 characterised in that the planet carrier (31) which mounts at least one planet wheel (37) is formed by a rotationally guided Maltese cross wheel with radially extending, outwardly open transport slots (35).

3. An adjusting apparatus according to claim 1 characterised in that the planet carrier (31) which mounts at least one planet wheel (37) is formed by a rotationally guided Maltese cross wheel (101) with radially extending, inwardly open transport slots (102).

4. An adjusting apparatus according to claim 2 or claim 3 characterised in that the planet carrier (31, 101) which is in the form of a Maltese cross wheel is arranged coaxially with the drive pinion (30) which operates as a sun wheel and a respective blocking groove (39) is provided between each of the transport slots (35, 102) disposed in a uniformly distributed arrangement at the periphery, on the peripheral side provided with the slot openings, wherein the blocking disc (30) which has the transport finger (43) engages into one of the blocking grooves (39).

5. An adjusting apparatus according to claim 4 characterised in that the blocking grooves (39) are provided in the peripheral surface of the Maltese cross wheel (31 or 101) in the form of cylindrical portions which are in positively matching relationship with the blocking disc (40) and the circular opening (46) disposed at the periphery of the blocking disc (40) is so dimensioned as to liberate the periphery of the Maltese cross wheel (31, 101) and the transport finger (43) is arranged on a shoulder (42) of the blocking disc in line with the centre line between the centre point of the blocking disc (40) and the apex point of the circular opening (46).

6. An adjusting apparatus according to claim 5 characterised in that the transport finger (43) comprises a pin (44) which is fixed to the shoulder (42) of the blocking disc (40) and which is embraced on its projecting end by a sound-dampingly encased rolling sleeve (45) which fits into the transport slots (35) of the Maltese cross disc (31, 101).

7. An adjusting apparatus according to one or more of the preceding claims characterised in that arranged on the planet carrier (31) which is in the form of a Maltese cross wheel are at least two planet wheels (37, 37') which are axially displaced relative to each other and which are in juxtaposed relationship in the peripheral direction and which operate as intermediate wheels, each of which, upon corresponding blocking of the planet carrier (31), is simultaneously in engagement with the gear (57) of the one output shaft (53) and the gear (58) of the further output shaft (54).

8. An adjusting apparatus according to one or more of the preceding claims characterised in that the blocking disc (40) which operates as a control member is intermittently driven by an auxiliary motor (50) in a controlled fashion by way of a gear train (48).

9. An adjusting apparatus according to one or more of claims 1 to 7 characterised in that the blocking disc (40) can be cut in controlledly by way of a clutch (97) of a drive shaft (26) for driving the drive pinion (30).

10. An adjusting apparatus according to one or more of claims 1 to 7 characterised in that the blocking disc (40) can be driven manually for actuation of the planet carrier (31, 101).

11. An adjusting apparatus according to one or more of claims 1 to 9 characterised in that disposed on the input side of the motor (28) for the drive pinion (30) is a resistor (73) for throttling the speed of rotation thereof, the resistor (73) remaining cut in only during the period of operation of the auxiliary motor (50).

12. An adjusting apparatus according to one or more of claims 1 to 9 characterised in that associated with the blocking disc (40) is a conductor path (80) which at the beginning of the rest condition of the blocking disc, in conjunction with switches (75), switches off the drive of the blocking disc in the selection position and fully cuts in the motor (28) for the drive pinion (30) by bridging over the resistor (73).

13. An adjusting apparatus according to one or more of the preceding claims characterised in that one of the output shafts (51 to 54) of the distributor transmission (24) is connected if required to a compressor for seat or backrest cushion adaptation and/or a hydraulic pump for seat adjustment.

FIG.1

FIG.2

FIG.4

FIG.3

FIG.5

0 067 893

FIG.6

4

FIG.7

FIG.8

0 067 893

FIG.9

7

FIG. 10

FIG. 11

FIG. 12

FIG. 13